# FASCICULE DE BREVET EUROPEEN

(11) **EP 0 732 363 B1**
(45) Date de publication et mention de la délivrance du brevet: **11.08.1999**
(21) Numéro de dépôt: 96200563.3
(22) Date de dépôt: 01.03.1996
(51) Int. Cl.: C08L 23/02, C08J 7/12

(54) **Procédé pour la fabrication d'un corps creux**
Verfahren zur Herstellung eines Hohlkörpers
Method of making hollow products

(30) Priorité: 14.03.1995 BE 9500225
(43) Date de publication de la demande: 18.09.1996
(73) Titulaire: SOLVAY (Société Anonyme), 1050 Bruxelles (BE)
(72) Inventeur: Tinant, Anne, B-1160 Bruxelles (BE); Houba, Roger, B-5800 Gembloux (BE)
(74) Mandataire: Decamps, Alain René François

(56) Documents cités:
- EP-A- 0 578 082
- LU-A- 52 906
- US-A- 3 911 184
- DATABASE WPI Derwent Publications Ltd., London, GB; AN 82-16591e XP002005072 & JP-A-57 012 041 (TOYO SODA) , 21 Janvier 1982
- DATABASE WPI Derwent Publications Ltd., London, GB; AN 89-280912 XP002005073 & JP-A-01 203 437 (SHOWA DENKO) , 16 Août 1989
- DATABASE WPI Derwent Publications Ltd., London, GB; AN 70-70777R & JP-B-45 030 600 (KURATEI)

## Description

La présente invention concerne un procédé pour la fabrication d'un corps creux comprenant une matière plastique.

Les corps creux, par exemple des flacons ou des réservoirs, sont le plus souvent utilisés pour contenir un fluide auquel ils sont substantiellement imperméables. Des matériaux métalliques sont utilisés de longue date pour la fabrication de tels corps creux. Aujourd'hui, les matières plastiques offrent de nombreux avantages à cet effet, notamment leur facilité de mise en oeuvre, leur légèreté, leur moindre sensibilité à la corrosion. Néanmoins, la plupart des matières plastiques courantes ne sont pas parfaitement imperméables à certaines substances organiques, et notamment à certains constituants présents dans les carburants. En particulier, l'imperméabilité relative des matières plastiques couramment utilisées et étant soumises à un traitement superficiel est très sensiblement affectée par la présence de traces d'eau et par l'incorporation dans les carburants d'un ou plusieurs alcools tels que par exemple l'éthanol ou le méthanol. En outre, les dispositions réglementaires concernant les émissions dans l'environnement tolérées en particulier des réservoirs à carburant sont de plus en plus strictes, en raison notamment des contraintes environnementales. Il convient dès lors de pouvoir disposer de corps creux offrant une imperméabilité sensiblement accrue, en particulier aux nouveaux carburants susmentionnés.

Il est connu de soumettre des corps creux à base de matière plastique à un traitement superficiel d'amélioration de leur imperméabilité, par exemple à un traitement de fluoration ou de sulfonation, en particulier de leur surface intérieure. A titre d'exemple d'un tel traitement superficiel, le document BE-740763 cite la sulfonation d'un récipient en présence d'anhydride sulfurique. Néanmoins, l'imperméabilité offerte par un récipient ainsi traité reste faible au regard des exigences susmentionnées.
La présente invention a dès lors pour objet de permettre la fabrication de corps creux présentant une imperméabilité élevée, en particulier aux carburants susmentionnés.

L'invention concerne à cet effet un procédé pour la fabrication d'un corps creux comprenant une matière plastique qui se caractérise en ce que l'on ajoute à la matière plastique au moins une polyalkylèneimine.

Les corps creux concernés peuvent être de tout type connu, notamment des flacons ou des réservoirs. L'invention est intéressante dans le cas d'un réservoir. Elle est tout particulièrement intéressante dans le cas d'un réservoir à carburant. Elle s'applique également de manière avantageuse à tout autre corps creux associé au fonctionnement du circuit d'alimentation en carburant d'un moteur destiné en particulier à l'équipement d'un véhicule automobile.

La matière plastique est une matière plastique polymère solide dans les conditions normales d'utilisation du corps creux, telle que connue par ailleurs. Cette matière plastique peut être constituée d'un ou plusieurs polymères, en général thermoplastiques. Souvent, on met en oeuvre un ou plusieurs polymères thermoplastiques hydrocarbonés possédant une structure moléculaire de base linéaire et dont les substituts éventuels sont non aromatiques. Les polymères peuvent être des homopolymères, copolymères ou leurs mélanges. A titre de tels polymères, on peut retenir par exemple des polyoléfines ou des polymères du chlorure de vinyle. De bons résultats ont été obtenus à partir d'une polyoléfine, en particulier à partir d'un polyéthylène. D'excellents résultats ont été obtenus à partir d'un polyéthylène haute densité (PEHD).

A la matière plastique peuvent évidemment être ajoutés, outre la polyalkylèneimine, un ou plusieurs additifs usuels tels que antioxydants, stabilisants, pigments ou autres, dans la mesure où ils n'affectent pas sensiblement les propriétés notamment mécaniques ni le comportement du corps creux lors de sa fabrication ou lors de son utilisation ultérieure.

Les corps creux visés comprennent une matière plastique. Ils peuvent être dans leur ensemble essentiellement constitués d'une seule matière plastique ou comprendre au moins une partie essentiellement constituée d'une matière plastique à laquelle est ajoutée au moins une polyalkylèneimine et par ailleurs une ou plusieurs autres parties essentiellement constituées d'une ou plusieurs autres matières plastiques ou d'un ou plusieurs autres matériaux. Par partie du corps creux, on entend ici désigner en particulier une couche d'un corps creux multicouche.

Parmi les polyalkylèneimines, on peut mettre en oeuvre en particulier les homo- ou les copolymères, non substitués, branchés ou linéaires, ou substitués sur les fonctions amines par des groupements alkyles ou acyles. Le poids moléculaire de ces polyalkylèneimines peut généralement varier de 300 à 1 000 000. De préférence, ce poids moléculaire est d'au moins 1 000. D'excellents résultats ont été obtenus avec une polyéthylèneimine (PEI).

La polyalkylèneimine peut être ajoutée à la matière plastique par mélange préalable à sa mise en oeuvre. De bons résultats ont été obtenus en ajoutant la polyalkylèneimine à la matière plastique lors de sa mise en oeuvre. La polyalkylèneimine est avantageusement ajoutée à la matière plastique à une température réduisant substantiellement sa viscosité, en pratique à une température d'au moins 40 °C, plus préférentiellement à une température d'au moins 70 °C. Avantageusement, cette température ne dépasse pas 250 °C, plus préférentiellement elle ne dépasse pas 200 °C.

D'excellents résultats ont été obtenus en utilisant à ce stade une polyalkylèneimine pure. En principe, la polyalkylèneimine n'est pas diluée, en particulier elle n'est pas diluée dans l'eau. On retient en pratique des qualités de polyalkylèneimine "sans eau".

La proportion de polyalkylèneimine à ajouter à la matière plastique peut être optimisée au cas par cas, en fonction notamment de la polyalkylèneimine, de la matière plastique, du type de corps creux et de l'utilisation qui en est envisagée. De préférence, on ajoute au moins 0,01 % en poids de polyalkylèneimine par rapport au poids de matière plastique, plus préférentiellement encore au moins 0,05 %. Avantageusement, on n'ajoute pas plus de 20 % en poids de polyalkylèneimine par rapport au poids de matière plastique, plus avantageusement encore pas plus de 10 %.

Le procédé selon l'invention comprend les étapes usuelles de fabrication d'un corps creux. Il peut en particulier comprendre une mise en oeuvre de la ou des matières plastiques et/ou du ou des autres matériaux destinés à constituer le corps creux. Dans le cas de la mise en oeuvre d'une ou plusieurs matières plastiques, on peut citer à titre d'exemples non limitatifs de modes de mise en oeuvre l'injection, l'extrusion ou l'extrusion-soufflage. En particulier, on réalise avantageusement comme mise en oeuvre une extrusion-soufflage.

Le procédé selon l'invention peut d'autre part comprendre un traitement superficiel d'au moins une partie du corps creux comprenant au moins une couche superficielle essentiellement constituée de la matière plastique à laquelle a été ajoutée au moins une polyalkylèneimine.

On peut faire subir le traitement superficiel à l'ensemble du corps creux. On peut également ne l'appliquer qu'à une partie dudit corps creux, en particulier à son intérieur ou à son extérieur. De bons résultats ont été obtenus en ne traitant superficiellement que l'intérieur du corps creux.

Le corps creux soumis au traitement superficiel peut n'être essentiellement constitué de la matière plastique à laquelle a été ajoutée au moins une polyalkylèneimine que dans la couche superficielle à traiter. D'excellents résultats ont cependant été obtenus en traitant superficiellement un corps creux dans son ensemble essentiellement constitué d'une seule matière plastique à laquelle a été ajoutée au moins une polyalkylèneimine.

Par traitement superficiel, on entend désigner tout traitement de surface connu en vue d'améliorer l'imperméabilité, tel que notamment une fluoration ou une sulfonation suivie d'une neutralisation.

De préférence, le traitement superficiel comprend au moins une étape de sulfonation et au moins une étape de neutralisation.

La sulfonation peut être réalisée en une ou plusieurs étapes successives. De bons résultats ont été obtenus en une seule étape.

La sulfonation est réalisée de manière et dans des conditions usuelles pour un homme du métier. On met en contact le corps creux ou la partie du corps creux à traiter avec de l'anhydride sulfurique dilué dans un composé inerte en phase liquide ou gazeuse. On retient de préférence un gaz inerte sec tel que par exemple de l'azote, de l'anhydride carbonique, de l'anhydride sulfureux ou de l'air. Il est important d'éviter la présence de vapeur d'eau qui pourrait entraîner, par réaction avec l'anhydride sulfurique, la formation de goutelettes d'acide sulfurique. On incorpore en général de 0,1 à 35 % en volume d'anhydride sulfurique, de préférence de 15 à 30 %. Le temps de contact est inversement proportionnel à la concentration en anhydride sulfurique. Il peut en général être de 0,1 à 20 minutes. La pression et la température peuvent être adaptées notamment en fonction des autres paramètres opératoires. On peut en particulier travailler à température et sous pression ambiantes.

Souvent, on purge après sulfonation le corps creux ou le récipient dans lequel est contenu de l'anhydride sulfurique résiduaire, par exemple avec un gaz inerte tel que l'azote. On peut également neutraliser l'anhydride sulfurique résiduaire par une injection d'ammoniac très brève, de l'ordre de quelques secondes, en particulier durant moins de 10 secondes. Dans ce dernier cas, il est ensuite préférable de rincer, le plus souvent à l'eau, le corps creux ou la partie du corps creux qui sera ensuite soumise à l'étape de neutralisation.

La neutralisation peut être réalisée en une ou plusieurs étapes successives.

Elle peut porter sur l'ensemble du corps creux ou au moins sur la partie dudit corps creux qui doit être traitée superficiellement et qui a été soumise à la sulfonation.

La neutralisation peut être réalisée de toute manière usuelle pour l'homme du métier, notamment de manière classique comprenant au moins une étape en présence d'ammoniac. De préférence, au moins une étape de neutralisation est réalisée par mise en contact avec au moins un composé polyaminé.

Par composé polyaminé, on entend désigner un composé aliphatique comprenant au moins deux fonctions amines. Comme composé polyaminé, on retient avantageusement une polyalkylènepolyamine. Parmi les polyalkylènepolyamines, de bons résultats ont été obtenus en particulier avec la triéthylènetétramine (TETA). On peut également retenir avantageusement comme composé polyaminé une alkylènepolyamine. Parmi les alkylènepolyamines, de bons résultats ont été obtenus avec l'éthylènediamine (EDA). Comme composé polyaminé, on retient également de manière intéressante une polyalkylèneimine. Parmi les polyalkylèneimines, on peut mettre en oeuvre les homo- ou les copolymères, non substitués, branchés ou linéaires, ou substitués sur les fonctions amines par des groupements alkyles ou acyles. Le poids moléculaire de ces polyalkylèneimines peut généralement varier de 300 à 1 000 000. De préférence, ce poids moléculaire est d'au moins 1 000. D'excellents résultats ont été obtenus en utilisant une polyéthylèneimine (PEI) comme composé polyaminé lors d'au moins une étape de neutralisation.

On peut utiliser à ce stade un ou plusieurs composés polyaminés. Par exemple, on peut retenir un mélange de composés polyaminés, à partir d'une ou plusieurs polyalkylènepolyamines, alkylènepolyamines et/ou une ou plusieurs polyalkylèneimines. Un tel mélange peut en particulier permettre d'associer les avantages de la mise en oeuvre de plusieurs polyalkylèneimines de poids moléculaires sensiblement différents. De préférence, on ne met pas en oeuvre seule une polyalkylèneimine de poids moléculaire supérieur à 500 000. On retient avantageusement un mélange de plusieurs polyéthylèneimines.

Durant cette étape de neutralisation, le composé polyaminé est généralement présent à raison d'au moins 0,05 % en volume. Il est de préférence présent à raison d'au moins 0,1 % en volume, plus préférentiellement encore à raison d'au moins 1 % en volume. Le composé polyaminé peut à ce stade être mis en oeuvre pur ou de manière diluée. Avantageusement, il est mis en oeuvre de manière diluée, en particulier sans dépasser 20 % en volume, plus particulièrement encore sans dépasser 10 % en volume. Le composé polyaminé peut à ce stade notamment être dilué dans l'eau.

Pour la neutralisation, le corps creux peut être mis en contact avec une solution de neutralisation sous forme liquide ou gazeuse. En pratique, il est simple de remplir le corps creux d'une solution de neutralisation aqueuse sous forme liquide. Cette solution peut en particulier être mise en oeuvre sous forme de jet pulvérisé.

Le temps de contact pour une étape de neutralisation peut aisément être optimisé par l'homme du métier à partir de quelques essais de mise au point, en relation avec les autres paramètres opératoires. En pratique, une courte durée suffit. De bons résultats ont été obtenus sans devoir dépasser 5 minutes. Souvent, ledit temps de contact est d'au moins 10 secondes, de préférence d'au moins 1 minute.

La neutralisation peut être réalisée dans une large plage de températures, par exemple de 0 à 100 °C en particulier lorsque le composé polyaminé est dilué dans l'eau. De bons résultats ont été obtenus à température ambiante.

La pression peut également être adaptée aux autres paramètres opératoires. De bons résultats ont été obtenus sous pression atmosphérique.

Après neutralisation, le corps creux est si nécessaire rincé et/ou séché, afin d'en éliminer les agents de neutralisation et les produits de réaction résiduaires.

Le traitement superficiel du corps creux doit porter sur une profondeur suffisante afin d'améliorer sensiblement son imperméabilité. En pratique, la profondeur traitée est souvent de l'ordre de 5 à 30 microns. De préférence, elle est d'au moins 10 microns.

Il peut s'avérer avantageux que la mise en oeuvre soit rapidement, en particulier immédiatement, suivie par le traitement superficiel.

Le procédé selon la présente invention permet d'obtenir des corps creux dont l'imperméabilité, en particulier après traitement superficiel, est améliorée de manière remarquable.

La présente invention a dès lors également pour objet un corps creux susceptible d'être obtenu par le procédé tel que décrit ci-dessus et comprenant une matière plastique à laquelle a été ajoutée au moins une polyalkylèneimine.

Pour les différentes définitions relatives à cet aspect de l'invention, on se référera aux définitions antérieurement données des notions concernées.

Les exemples 1R à 3R, 6R, 7R, 10R et 11R qui suivent sont donnés à titre de comparaison.

Les exemples 4, 5, 8, 9, 12 et 13 illustrent l'invention de manière non limitative.

La perméabilité y est exprimée en g.mm/m².j, soit en grammes de carburant fois millimètres d'épaisseur du corps creux par mètre carré de surface d'échange avec l'extérieur et par jour. Il est en effet logique d'apprécier la perméabilité d'un corps creux proportionnellement à son épaisseur et de manière inversement proportionnelle à la surface d'échange qu'il possède avec l'extérieur, plutôt que de se référer à une perméabilité seulement exprimée en grammes de carburant par jour. En effet, une telle mesure ne prendrait pas en compte l'effet d'échelle bien connu de l'homme du métier, par exemple dans le cas de corps creux, entre un flacon, d'épaisseur et de surface réduite, et un réservoir à carburant, d'épaisseur et de surface d'échange plus élevées.

Par perméabilité en régime, on entend désigner cette caractéristique lorsqu'elle est devenue stable en fonction du temps. Le délai nécessaire pour y parvenir est évidemment lié notamment aux caractéristiques propres au corps creux et ne peut être défini de manière absolue. A titre d'ordre de grandeur, on peut en particulier estimer que la perméabilité d'un flacon est en régime après environ 1 mois tandis qu'il faut environ 3 mois pour parvenir au même état dans le cas d'un réservoir.

### Exemple 1R

On a réalisé par extrusion-soufflage un flacon en polyéthylène haute densité (PEHD) d'un volume intérieur de 360 cm³, d'une épaisseur de 2 mm et d'une surface intérieure de 280 cm². Le PEHD utilisé était de type PHILLIPS de densité moyenne 0,946 g/cm³, d'un indice de fluidité HLMI (High Load Melt Index) mesuré selon la norme ASTM 1238 (1987) de 5,4 à 6,8 g/10 min et contenant 1g/kg de stabilisant IRGANOX® 1076.

La surface interne de ce flacon a ensuite été mise en contact par injection et maintien durant 10 minutes à température ambiante et sous pression atmosphérique d'un flux gazeux contenant 15 % en volume d'anhydride sulfurique dilué dans de l'azote.

Le flacon a alors été purgé avec de l'azote durant 5 minutes à température ambiante et sous pression atmosphérique.

Il a ensuite été rempli à température ambiante et sous pression atmosphérique avec 200 cm³ d'une solution aqueuse contenant 10 % en volume d'ammoniac puis agité durant 5 minutes.

Le flacon a enfin été vidé, rincé à l'eau et séché en étuve à 60 °C durant une nuit.

L'évaluation de la perméabilité de ce flacon a été réalisée avec un mélange de 92,5 % en volume d'essence CEC RF 08-A-85 sans plomb, d'indice d'octane 95, 5 % en volume de méthanol et 2,5 % en volume d'éthanol (mélange connu aux Etats-Unis sous l'appelation TF2 = Test Fuel 2, ci-après mélange TF2). Le flacon a été rempli de 300 cm³ de ce mélange, bouché, pesé et stocké dans une salle à 40 °C.

Après 1 mois, en état de régime, sa perméabilité, mesurée par perte de poids selon la norme ECE 34 (Annexe 5), était de 14,3 g.mm/m².j.

A titre de comparaison, le même flacon non traité perdait en régime 71 g.mm/m².j.

### Exemple 2R

Un flacon identique à celui selon l'exemple 1R a été fabriqué de la même manière.

Sa perméabilité a été évaluée de la même manière mais avec un mélange de 90 % en volume d'essence CEC RF 08-A-85 sans plomb, d'indice d'octane 95, et 10 % en volume d'éthanol (mélange connu aux Etats-Unis sous l'appelation TF1 = Test Fuel 1, ci-après mélange TF1).

Après 1 mois, en état de régime, la perméabilité du flacon, mesurée par perte de poids selon la norme ECE 34 (Annexe 5), était de 21,4 g.mm/m².j.

### Exemple 3R

Un essai identique à celui selon l'exemple 2R a été réalisé, si ce n'est que l'on a ajouté au mélange TF1 0,1 % d'eau.

Après 1 mois, en état de régime, la perméabilité du flacon, mesurée par perte de poids selon la norme ECE 34 (Annexe 5), était de 50 g.mm/m².j.

### Exemple 4

On a réalisé par extrusion-soufflage un flacon analogue à celui selon l'exemple 1R, mais en ayant préalablement ajouté au PEHD, dans un mélangeur rapide à température ambiante, 0,2 % en poids par rapport au PEHD de polyéthylèneimine pure, de qualité "sans eau", de poids moléculaire d'environ 20 000, de marque LUPASOL® WF.

On a traité superficiellement et évalué la perméabilité du flacon ainsi obtenu de la même manière que selon l'exemple 2R.

Après 1 mois, en état de régime, la perméabilité du flacon, mesurée par perte de poids selon la norme ECE 34 (Annexe 5), était de 10,2 g.mm/m².j.

### Exemple 5

Un essai identique à celui selon l'exemple 4 a été réalisé, si ce n'est que l'on a ajouté au mélange TF1 0,1 % d'eau.

Après 1 mois, en état de régime, la perméabilité du flacon, mesurée par perte de poids selon la norme ECE 34 (Annexe 5), était de 21,4 g.mm/m².j.

### Exemple 6R

Un flacon identique à celui selon l'exemple 1R a été traité de la même manière si ce n'est que la neutralisation a été réalisée en remplissant le flacon avec une solution aqueuse contenant 5 % en volume de polyéthylèneimine LUPASOL WF.

La perméabilité de ce flacon a été évaluée de la même manière que selon l'exemple 2R.

Après 1 mois, en état de régime, la perte de poids, selon la norme ECE 34 (Annexe 5), était de 2,14 g.mm/m².j.

### Exemple 7R

Un essai identique à celui selon l'exemple 6R a été réalisé, si ce n'est que l'on a ajouté au mélange TF1 0,1 % d'eau.

Après 1 mois, en état de régime, la perte de poids, selon la norme ECE 34 (Annexe 5), était de 5 g.mm/m².j.

### Exemple 8

Un flacon identique à celui selon l'exemple 4 a été réalisé de la même manière.

On a traité superficiellement et évalué la perméabilité de ce flacon de la même manière que selon l'exemple 6R.

Après 1 mois, en état de régime, sa perméabilité, mesurée par perte de poids selon la norme ECE 34 (Annexe 5), était de 1,07 g.mm/m².j.

### Exemple 9

Un flacon identique à celui selon l'exemple 5 a été réalisé de la même manière.

On a traité superficiellement et évalué la perméabilité de ce flacon de la même manière que selon l'exemple 7R.

Après 1 mois, en état de régime, sa perméabilité, mesurée par perte de poids selon la norme ECE 34 (Annexe 5), était de 2,85 g.mm/m².j.

### Exemple 10R

On a réalisé par extrusion-soufflage un réservoir à carburant en polyéthylène haute densité (PEHD) d'un volume intérieur de 60 litres, d'une épaisseur moyenne de 5 mm et de surface intérieure de 1,5 m². Le PEHD utilisé était de densité moyenne 0,948 g/cm³, d'un indice de fluidité HLMI de 3,4 g/10 min et contenait 0,2 g/kg de noir de carbone et 2 g/kg de stabilisant IRGANOX® B 225.

La surface interne de ce réservoir a ensuite été mise en contact par injection et maintien durant 2 minutes à 49 °C et sous pression atmosphérique d'un flux gazeux contenant 15 % en volume d'anhydride sulfurique dilué dans de l'azote.

Le réservoir a alors été purgé avec de l'azote durant 2 minutes à température ambiante et sous pression atmosphérique.

Il a ensuite été rempli à température ambiante et sous pression atmosphérique avec un mélange comprenant 70 % en volume d'ammoniac et 15 % en volume d'air humidifiés par 15 % en volume d'eau sous forme de fines goutelettes pulvérisées, durant 100 secondes.

Le réservoir a enfin été vidé, rincé à l'eau et séché en étuve à 60 °C durant une nuit.

L'évaluation de la perméabilité du réservoir a été réalisée avec un mélange TF1. Le réservoir a été rempli de 30 litres de ce mélange, bouché, pesé et stocké dans une salle à 40 °C.

Après 3 mois, en état de régime, sa perméabilité, mesurée par perte de poids selon la norme ECE 34 (Annexe 5), était de 10 g.mm/m².j.

### Exemple 11R

Un réservoir à carburant identique à celui selon l'exemple 10R a été réalisé de la même manière.

On a traité superficiellement ce réservoir de la même manière que selon l'exemple 10R, si ce n'est qu'une seconde étape de neutralisation du réservoir a été ajoutée durant laquelle il a été rempli avec 3 litres d'une solution aqueuse contenant 5 % en volume de polyéthylèneimine LUPASOL P de poids moléculaire compris entre 600 000 et 1 000 000, puis agité durant 3 minutes.

Après 3 mois, en état de régime, la perméabilité de ce réservoir, mesurée par perte de poids selon la norme ECE 34 (Annexe 5), était de 1 g.mm/m².j.

### Exemple 12

On a réalisé par extrusion-soufflage un réservoir à carburant analogue à celui selon l'exemple 10R, mais en ajoutant au PEHD, lors de l'extrusion, à une température de 70 °C, 0,3 % en poids par rapport au PEHD de polyéthylèneimine pure LUPASOL WF.

On a traité superficiellement et évalué la perméabilité du réservoir obtenu de la même manière que selon l'exemple 10R.

Après 3 mois, en état de régime, sa perméabilité, mesurée par perte de poids selon la norme ECE 34 (Annexe 5), était de 5 g.mm/m².j.

### Exemple 13

Un réservoir à carburant identique à celui selon l'exemple 12 a été réalisé de la même manière.

On a traité superficiellement et évalué la perméabilité de ce réservoir à carburant de la même manière que selon l'exemple 11R.

Après 3 mois, en état de régime, la perméabilité de ce réservoir, mesurée par perte de poids selon la norme ECE 34 (Annexe 5), était de 0,5 g.mm/m².j.

## Revendications

1. Procédé pour la fabrication d'un corps creux comprenant une matière plastique, caractérisé en ce que l'on ajoute à la matière plastique au moins une polyalkylèneimine.

2. Procédé selon la revendication 1, dans lequel le corps creux est un réservoir à carburant.

3. Procédé selon l'une quelconque des revendications 1 ou 2, dans lequel la matière plastique est un polyéthylène haute densité.

4. Procédé selon l'une quelconque des revendications précédentes, dans lequel la polyalkylèneimine est une polyéthylèneimine.

5. Procédé selon l'une quelconque des revendications précédentes comprenant un traitement superficiel d'au moins une partie du corps creux comprenant au moins une couche superficielle essentiellement constituée de la matière plastique à laquelle a été ajoutée au moins une polyalkylèneimine.

6. Procédé selon la revendication 5, dans lequel le traitement superficiel comprend au moins une étape de sulfonation et au moins une étape de neutralisation.

7. Procédé selon la revendication 6, dans lequel au moins une étape de neutralisation est réalisée par mise en contact avec au moins un composé polyaminé.

8. Procédé selon la revendication 7, dans lequel le composé polyaminé utilisé lors d'au moins une étape de neutralisation est une polyéthylèneimine.

9. Procédé selon la revendication 7, dans lequel au moins une étape de neutralisation est réalisée par mise en contact avec un mélange de composés polyaminés.

10. Corps creux susceptible d'être obtenu par le procédé selon l'une quelconque des revendications précédentes et comprenant une matière plastique à laquelle a été ajouté au moins une polyalkylèneimine.

## Claims

1. Process for manufacturing a hollow body including a plastic, characterized in that at least one polyalkyleneimine is added to the plastic.

2. Process according to Claim 1, in which the hollow body is a fuel tank.

3. Process according to either of Claims 1 and 2, in which the plastic is a high-density polyethylene.

4. Process according to any one of the preceding claims, in which the polyalkyleneimine is a polyethyleneimine.

5. Process according to any one of the preceding claims, which includes a surface treatment of at least part of the hollow body including at least one surface layer essentially consisting of the plastic to which at least one polyalkyleneimine has been added.

6. Process according to Claim 5, in which the surface treatment includes at least one sulphonation step and at least one neutralization step.

7. Process according to Claim 6, in which at least one neutralization step is carried out by contacting with at least one polyamine compound.

8. Process according to Claim 7, in which the polyamine compound used during at least one neutralization step is a polyethyleneimine.

9. Process according to Claim 7, in which at least one neutralization step is carried out by contacting with a mixture of polyamine compounds.

10. Hollow body capable of being obtained by the process according to any one of the preceding claims and including a plastic to which at least one polyalkyleneimine has been added.

## Patentansprüche

1. Verfahren zur Herstellung eines Hohlkörpers, der einen Kunststoff umfaßt, dadurch gekennzeichnet, daß man zu dem Kunststoff wenigstens ein Polyalkylenimin hinzufügt.

2. Verfahren gemäß Anspruch 1, bei dem der Hohlkörper ein Treibstoffbehälter ist.

3. Verfahren gemäß einem der Ansprüche 1 oder 2, bei dem der Kunststoff ein Polyethylen hoher Dichte ist.

4. Verfahren gemäß einem der vorhergehenden Ansprüche, bei dem das Polyalkylenimin ein Polyethylenimin ist.

5. Verfahren gemäß einem der vorhergehenden Ansprüche, das eine Oberflächenbehandlung wenigstens eines Teils des Hohlkörpers umfaßt, der wenigstens eine Oberflächenschicht umfaßt. die im wesentlichen aus dem Kunststoff, zu dem wenigstens ein Polyalkylenimin hinzugefügt wurde, besteht.

6. Verfahren gemäß Anspruch 5, bei dem die Oberflächenbehandlung wenigstens einen Sulfonierungsschritt und wenigstens einen Neutralisationsschritt umfaßt.

7. Verfahren gemäß Anspruch 6, bei dem wenigstens ein Neutralisationsschritt durch Inkontaktbringen mit wenigstens einer Polyaminverbindung durchgeführt wird.

8. Verfahren gemäß Anspruch 7, bei dem die bei wenigstens einem Neutralisationsschritt verwendete Polyaminverbindung ein Polyethylenimin ist.

9. Verfahren gemäß Anspruch 7, bei dem wenigstens ein Neutralisationsschritt durch Inkontaktbringen mit einem Gemisch von Polyaminverbindungen durchgeführt wird.

10. Hohlkörper, der durch das Verfahren gemäß einem der vorhergehenden Ansprüche erhalten werden kann und der einen Kunststoff, zu dem wenigstens ein Polyalkylenimin hinzugefügt wurde, umfaßt.
